# EUROPÄISCHE PATENTSCHRIFT

(11) **EP 0 909 234 B1**
(45) Veröffentlichungstag und Bekanntmachung des Hinweises auf die Patenterteilung: **12.06.2002**
(21) Anmeldenummer: 98922699.8
(22) Anmeldetag: 14.04.1998
(51) Int. Cl.: B29C 67/00

(54) **VERFAHREN ZUM ERZEUGEN EINES DREIDIMENSIONALEN KÖRPERS**
METHOD FOR MAKING A THREE-DIMENSIONAL BODY
PROCEDE DE FABRICATION D'UN CORPS EN TROIS DIMENSIONS

(30) Priorität: 13.04.1997 DE 19715582
(43) Veröffentlichungstag der Anmeldung: 21.04.1999
(73) Patentinhaber: Notar, Walter, 89264 Weissenhorn (DE); Ederer, Ingo, 86926 Pflaumdorf (DE)
(72) Erfinder: EDERER, Ingo, 86926 Pflaumdorf (DE)
(74) Vertreter: Viering, Jentschura & Partner
(86) Internationale Anmeldenummer: EP9802154
(87) Internationale Veröffentlichungsnummer: WO9846415

(56) Entgegenhaltungen:
- EP-A- 0 490 546
- EP-A- 0 686 481
- WO-A-95/05935
- DE-A- 19 528 215
- DE-C- 4 436 695
- US-A- 5 503 785

## Beschreibung

Die Erfindung betrifft ein Verfahren zum Erzeugen eines dreidimensionalen Körpers, wobei der Aufbau des Körpers schichtenweise durch Auftragen von zwei unterschiedlichen Materialien, eines als Trennmittel verwendeten ersten Materials und eines zweiten Materials, in jeder Schicht erfolgt.

Durch die stetige Verschärfung des internationalen Wettbewerbs mit immer kürzeren Produktzyklen müssen auch die Entwicklungszeiten reduziert werden. Hier birgt die schnelle Herstellung von Prototypen ein großes Einsparpotential in allen Entwicklungs- und Designphasen.

Bestehende Verfahren zur computergestützten Herstellung von dreidimensionalen Gegenständen lassen sich in subtraktive und additive Verfahren einteilen. Bekanntester Vertreter der ersten Gruppe ist das NC-Fräsen. Nachteile ergeben sich hier durch die beschränkte Formgebung auch bei Einsatz von bis zu 5 Fräsachsen. Desweiteren ist das Verfahren aufwendig, für Einzelstücke teuer und erfordert eine entsprechende Peripherie mit eingewiesenem Bediener.

In der zweiten Gruppe finden sich neuere Verfahren wie z.B. die Stereolithographie. Hier wird in einen Behälter mit flüssigem Photopolymer konstanter Füllhöhe eine Aufzugmechanik eingebracht, die ein Absenken einer Plattform entsprechend der gewünschten Schichtdicke ermöglicht. In einem ersten Schritt wird über der getauchten Plattform ein Harzfilm genauer Dicke durch einen Wischer aufgebracht. Der Kunststoff wird anschließend selektiv durch Belichtung mit einem UV-Laser ausgehärtet. Dazu zeichnet der über einen Kontrollrechner gesteuerte und im Scanner entsprechend abgelenkte Strahl die Form einer Bauteilschicht und entsprechender Geometrien zum Stützen des Bauteils auf der Harzoberfläche nach. Anschließend wird die Plattform im Harzbad um eine Schichtdicke abgesenkt, eine frische Kunststoffschicht aufgebracht und wieder belichtet. Dieser Vorgang wird bis zur Vollendung des Bauteils wiederholt. Anschließend wird das Bauteil dem Bad entnommen, von übrigen Harzresten gereinigt und die Stützstrukturen entfernt.

Die hohen Anschaffungs- und Betriebskosten beschränken den Einsatz dieses Verfahrens. Zudem ist wegen des flüssigen Kunstharzes eine entsprechende Peripherie zur Reinigung der Bauteile erforderlich.

Die EP-A-0 322 257 beschreibt ein ähnliches Verfahren, bei dem photosensitives Material schichtweise über eine computergenerierte Maske belichtet wird. Nichtbelichtetes Material wird anschließend entfernt und durch nicht photosensitives Material ersetzt. Der Vorgang wird schichtweise bis zur Vollendung des Bauteils wiederholt.

Das Verfahren benötigt aufwendige Reinigungseinrichtungen zum Entfernen des überschüssigen Materials in jeder Schicht. Dabei entsteht eine große Menge noch reaktiven Abfalls.

Diesen Nachteil vermeiden Verfahren wie das in US-A-4, 247 508 beschriebene selektive Lasersintern. Hier wird Pulver in einer dünnen Schicht über der Bauplattform aufgebracht und mittels eines über einen Kontrollrechner gesteuerten und im Scanner entsprechend abgelenkten Laserstrahls aufgeschmolzen. Der Vorgang wird wieder bis zur Vollendung des Bauteils wiederholt. Bei dem Pulver kann es sich z.B. um Kunststoff oder Metall handeln. Bei geschickter technischer Ausführung übernimmt das lose Pulver die Stützaufgabe. Somit genügt es, nicht angeschmolzenes Pulver nach Beendigung der Bauphase abzublasen, um das fertige Bauteil zu erhalten.

Allerdings benötigt auch dieses Verfahren teure Laser, Optiken und Laser-Ablenkeinrichtungen. Zudem bedingt die Körnigkeit des Pulvers (ca. 50 -100 µm durchschnittlicher Komdurchmesser) eine entsprechende Oberflächenrauhigkeit der entstehenden Bauteile.

Bei einem am MIT entwickelten und in EP 0 431 924 B1 beschriebenen ähnlichen Verfahren werden dünne Pulverschichten auf eine Grundplatte aufgebracht, die dann durch gezielte Klebstoffzugabe entsprechend des aktuellen Werkstückquerschnitts verfestigt werden. Der Klebstoff wird tröpfchenweise mittels eines Druckkopfs aufgetragen. Das Baumaterial besteht aus dem gebundenen Pulver. Das lose Pulver übernimmt die Stützfunktion und wird nach dem Prozeßende entfernt.

Dieses Verfahren wird hauptsächlich zum Bau von Feingußformen mit Keramik verwendet und weist Nachteile durch das komplexe Pulverhandling auf. Zudem bestehen die Bauteile immer aus einem Pulver - Binder - Verbund, der nie volle Dichte erreicht und damit immer niedrige Festigkeitswerte aufweist.

Beim 'Ballistic Particle Manufacturing' (BPM) der Firma BPM wird geschmolzenes Material tröpfchenweise mit einer Düse aufgespritzt. Die Düse wird hierbei mittels einer Fünfachseinheit verfahren. Dadurch kann auf eine Stützkonstruktion verzichtet werden. Nachteil dieses Verfahrens ist zum einen die lange Bauzeit, da nur mit einer Düse Material aufgetragen wird. Zur Zeit werden zur Reduzierung der Bauzeit nur Hohlmodelle hergestellt. Zum anderen ist die Oberfläche aufgrund des ungleichmäßigen Materialauftrags stark strukturiert.

In WO 95/05943 wird der Ansatz verfolgt, zwei verschiedene Materialien über Tropfenerzeuger zu dosieren. Das erste Material dient zur Erzeugung des Werkstückquerschnitts, das zweite zum Aufbau einer Stützstruktur an den notwendigen Stellen. Nach Abschluß der Bauphase wird die Stützstruktur durch Eintauchen in ein Lösungsmittelbad entfernt. Übrig bleibt das fertige Werkstück, das aus unlöslichem Material besteht.

Diese Technik weist insgesamt Vorteile beim Bau filigraner Strukturen auf, aber durch das zweimalige Dosieren wird dieser Prozeß sehr langsam, was zu unakzeptablen Prozeßzeiten führt. Zudem sind den Materialeigenschaften durch die bisher maximalen Prozeßtemperaturen von ca. 80°C im Dosierkopf enge Grenzen gesetzt.

In EP 0 500 225 B1 wird ein Verfahren beschrieben, bei dem ebenfalls zwei Materialien verwendet werden. Mit dem ersten Material, das mit Dosierköpfen selektiv dosiert wird, wird das Bauteil erstellt. Mit dem zweiten Material, dessen Auftragsart nicht weiter spezifiziert wird, entsteht eine Stützkonstruktion.

Auch hier besteht wieder der Nachteil, daß das Modellmaterial über die Dosierköpfe förderbar sein muß und sich daher eine Einschränkung hinsichtlich der Materialvielfalt und dessen Qualität ergibt. Der technische Aufwand für die Dosierung ist erheblich, da in der Regel eine aulwendige Vorheizung des Materials vonnöten ist. Desweiteren entsteht wiederum bei großen Modellen ein enormer Zeitverlust durch den selektiven Auftrag einer großen Materialmenge.

Aus der WO 95 05935 A ist ein Verfahren zum schichtweisen Herstellen eines dreidimensionalen Körpers durch kontrollierte Ablagerung und Entnahme mehrerer unterschiedlicher Materialien bekannt, bei dem das Ablagern und die Entnahme von Material jeweil durch ein Computermodell gesteuert ist.

Aus der DE 195,28,215 A (Himmer) ist ein Verfahren zum schichtweisen Herstellen von dreidimensionalen Modellen und Formen bekannt, bei dem zwei unterschiedliche Materialien verwendet werden und bei dem während des Bauprozesses an jeder Schicht eine mechanische, physikalische oder chemische Bearbeitung erfolgt.

Aus der US-A-5,503,785 (Crump et al.) ist ein Verfahren zum Erzeugen eines dreidimensionalen Körpers bekannt, wobei der Aufbau des Körpers schichtenweise durch Auftragen von zwei unterschiedlichen Materialien, eines als Trennmittel verwendeten ersten Materials und eines zweiten Materials, in jeder Schicht erfolgt. Dabei wird jedes der beiden Materialien gezielt, einem Muster folgend aufgetragen.

In Anbetracht der oben geschilderten Probleme der bisherigen Verfahren ist es das Ziel der Erfindung ein schnelles Verfahren zur Herstellung von dreidimensionalen Gegenständen zur Verfügung zu stellen, das einen geringen technischen Aufwand benötigt und geeignet ist in einer Büroumgebung zu arbeiten.

Gelöst wird die Aufgabe nach der Erfindung durch ein Verfahren zum Erzeugen eines dreidimensionalen Körpers gemäß dem Patentanspruch 1, Zweckmäßige Weiterbildungen der Erfindung sind Gegenstand der abhängigen Ansprüche.

Ein dreidimensionaler Körper kann in folgenden Schritten hergestellt werden:
a) Auftragen eines zunächst flüssigen Trennmittels auf eine Bauplattform mittels Einzeltropfenerzeuger an ausgewählten Bereichen, die zum einen dem Schnitt der dünnwandigen Schale des dreidimensionalen Gegenstandes entsprechen und zum anderen eine gitterförmige Struktur über der restlichen Fläche der Bauplattform bilden.
b) Auffüllen des Formkastens der kompletten Schicht mit einer härtbaren Formmasse.
c) Härten des zweiten Materials
d) Glätten und Nivellieren der Schicht, so daß die obere Seite des Trennmittels frei liegt.
e) Wiederholen der Schritte a) bis d) mit den entsprechend der Körperkontur des Gegenstandes folgenden Querschnitten, um den dreidimensionalen Gegenstand herzustellen.
f) Entfernen der nicht zum Bauteil gehörenden Strukturen aus der Formmasse durch Lösen des Trennmittels.

Das erfindungsgemäße Verfahren läßt sich realisieren mit einem Gerät zur Herstellung dreidimensionaler Gegenstände direkt aus Computerdaten bestehend aus:
einem Mikrocomputer zur Aufbereitung der Daten und Steuerung des Bauprozesses, einer in vertikaler Richtung schrittweise verfahrbaren Bauplattform,
einem Dosiergerät zum selektiven Auftragen des Trennmittels, das über eine Mechanik vom Computer gesteuert so bewegt werden kann, daß jeder Punkt der Bauplattform mit Trennmittel versehen werden kann,
einem Dosiergerät zum gleichmäßigen und schnellen Auftrag der Formmasse über die gesamte Bauplattform,
einer Vorrichtung zum Härten der Formmasse und
einer Vorrichtung zum Glätten und Nivellieren der durch das Trennmittel und die Formmasse gebildeten Schicht.

Der Vorteil der Erfindung gegenüber dem Stand der Technik besteht in der Kombination eines meist linienförmigen, gezielten Materialauftrages mit einem ungezieltem Massenauftragsprozeß zum Füllen der Schicht. Dadurch, daß bei dem ersten Prozeß nur auf geringe Teile des Baufeldes das erste Material aufgetragen wird, wird der Gesamtprozeß deutlich beschleunigt.

Zudem entfällt die Unterscheidung Bau- und Stützmaterial, da in dem Massenauftragsprozeß beides mit dem selben Material entsteht. Die Unterscheidung erfolgt durch die Lage des Materials entweder innerhalb der Schalenberandung und damit Baumaterial oder außerhalb der Berandung und damit Stützmaterial. Das aufgetragene Trennmittel stellt die Voraussetzung für diese Entscheidung dar. Der Prozeß ist damit erheblich schneller als die im Stand der Technik beschriebenen Verfahren.

Das Ausführen von vollständigen Hohlräumen ist durch das schichtweise Füllen dieser zum Hohlraum gehörenden Querschnittsregionen mit Trennmittel möglich. Durch Lösen des Trennmittels nach Prozeßende und Entnahme des Bauvolumens und Entleeren der Kavität durch eine vorzusehende Öffnung wird der Hohlraum entformt.

Durch den Einsatz von drop-on-demand Drucksystemen aus dem Tintendruck für den Auftrag des Trennmittels stehen ausreichend genaue und sehr günstige Systeme zur Verfügung, die das Gesamtsystem gegenüber den vorbekannten Lösungen kostengünstiger werden lassen.

Zudem ist die Auswahl an verschiedenen Baumaterialien deutlich größer als bei den vorbekannten Verfahren, da die Stoffeigenschaften wie Viskosität und Oberflächenspannung im fließfähigen Zustand eine deutlich geringere einschränkende Wirkung beim Auftragsprozeß aufweisen. Somit sind Bauteile mit besseren Eigenschaften in Bezug auf Festigkeit, Steifigkeit, Härte und Oberflächengüte herstellbar.

Durch die große Materialauswahlmöglichkeit besteht zudem die Möglichkeit Materialkombinationen zu finden, die während des Bauprozesses nur geringe Emissionen verursachen und im ausgehärtetem Zustand nicht hautreizend sind, so daß hier wesentliche Voraussetzungen für ein bürokompatibles Gerät erfüllt sind.

Nach Prozeßende wird der komplette Bauraum als fester Block entnommen. Damit entfallen spezielle Handhabungseinrichtungen. Es treten keine losen Partikel oder ungehärteten Flüssigkeiten auf, die die Umgebung verschmutzen oder den Bediener beeinträchtigen könnten.

Das Entfernen der nicht zum gewünschten Bauteil gehörenden Teile kann bei entsprechender Ausführung des Trennmittels ohne Hilfsmittel erfolgen. Erfindungsgemäß ist auch ein Lösen des Trennmittels durch Lösemittet, vorzugsweise Wasser oder durch den Einfluß von Temperatur möglich.

Durch die vollständige Aushärtung des Formstoffes entstehen keine Sonderabfälle.

Mit der vorliegenden Erfindung können beliebig geformte Gegenstände in kurzer Zeit ohne Nutzung weiterer Verfahren hergestellt werden. Basis für das erfindungsgemäße Verfahren ist das Vorhandensein dreidimensionaler Computerdaten z.B. aus einem CAD-System. Wobei auch andere Datenquellen in Frage kommen. So sind z.B. auch Daten aus dreidimensional arbeitenden Scannern möglich.

Die Daten des gewünschten Körpers werden an den Kontrollrechner überführt, der dann der Körpergeometrie eine dünnwandige geschlossene Schale hinzufügt. Anschließend wird nur die Schalengeometrie softwaretechnisch senkrecht zur Bauachse entsprechend dem momentanen Baufortschritt geschnitten. Dem vorliegenden Schnitt wird eine ebenfalls dünnwandige Gitterstruktur hinzugefügt, die das gesamte Baufeld abdeckt, um das Bauteil nach Prozeßende entformen zu können. Diese Geometriedaten werden aus einem Trennmittel auf der Bauplattform nachgezeichnet.

Das Trennmittel wird dabei vorzugsweise über einen Tropfenerzeuger, ähnlich den im Tintendruck eingesetzten drop on demand Systemen, gesteuert über den Kontrollrechner, aufgetragen. Um dies zu erzielen ist ein Dosierkopf mit einer oder mehreren Düsen an einer von zwei Achsen angebracht, die orthogonal zueinander beweglich sind und mit denen jeder Punkt des Baufeldes mit dem Tropfenerzeuger erreicht werden kann. Das im beheizten Dosierkopf flüssige Trennmittel erstarrt bei der Abkühlung nach dem Auftreffen auf der Bauplattform. Bedingt durch die bei der Härtung steigende Oberflächenspannung und Viskosität des Trennmittels wird ein Zerfließen verhindert. So entsteht eine dreidimensonale Berrandung des Körperschnittes und zusätzlich das Gitter. Die Höhe dieser Trennmittel-Struktur über das bestehende Baufeld bestimmt die Schichtstärke.

Nach Fertigstellung des Trennmittelauftrages erfolgt der vom Kontrollrechner gestartete Formmassenauftrag. Dieser kann auf verschiedene Weise geschehen. Eine Möglichkeit besteht in der Bewegung eines Formmassen-Reservoirs über die Bauplattform, wobei über eine definierte Auslaßöffnung eine bestimmte Menge auf das Baufeld dosiert wird.

Eine andere Möglichkeit betrifft das Verteilen einer am Rand des Baufeldes bereitgestellten Menge der Formmasse auf dem Baufeld über ein Rakel oder eine Rolle.

Denkbar ist auch ein Auftrag der Formmasse über eine Art Siebdruckverfahren. Hier wird ein Sieb auf Höhe der Schichtstärke über das Baufeld gebracht, eine vorbestimmte Menge der Formmasse auf das Sieb aufgetragen und anschließend mit einem Rakel durch das Sieb gedrückt.

Allen Verfahren gemein ist, daß ein enger Kontakt zwischen Formmasse und Trennmittel entsteht und die Höhe der neu aufgetragenen Formmasse mindestens einer Schichtstärke entspricht. Nach oder während des Formmassenauftrages tritt die Härtung der Formmasse ein. Möglich wird dies durch einen temperaturbedingten Phasenwechsel oder eine Vernetzungsreaktion der Formmasse. Letztere kann durch das Zumischen einer Härterkomponente beim Auftrag erfolgen oder durch Strahlung induziert werden, die durch eine entsprechende Vorrichtung eingebracht wird.

Im nächsten Schritt wird die Schichtstärke eingestellt und überschüssiges Material z.B. über eine Absaugvorrichtung entfernt. Wichtig dabei ist, daß die Oberseite des Trennmittels danach freiliegt, um im nächsten Schritt einen direkten Kontakt des nächsten Trennmittelauftrages auf die bestehende Kontur und damit die geschlossene Schale aus Trennmittel zu ermöglichen. Dieser Vorgang kann über geeignete Fräseinrichtungen oder eine bewegte Schneide realisiert werden. Bei entsprechender Ausführung des Schichtauftrages der Formmasse kann dieser Vorgang entfallen oder erst nach einer gewissen Anzahl von Schichten erfolgen, um die Bauteiltoleranz in der vertikalen Achse zu kontrollieren. Damit dieser Schritt entfallen oder in der Ausführungszahl verringert werden kann wird ist es notwendig, daß kein Formmassenmaterial auf die Trennmittelberandung aufgetragen wird oder diese Material bedingt durch Oberflächenkräfte wieder abfließt.

Im folgenden Schritt wird die Bauplattform um die Schichtstärke abgesenkt und der nächste Schnitt der Schale des Körpers im Steuerrechner verarbeitet. Der Prozeß beginnt wieder von neuem mit dem Trennmittelauftrag.

Dieser Ablauf wird bis zur Fertigstellung der letzten Schicht wiederholt. Danach wird das komplett gefüllte Bauvolumen aus dem Gerät genommen und die nicht zum Bauteil gehörenden ausgehärteten Formmassenteile, die als Stützkörper für den dreidimensionalen Körper gedient haben, entlang der Trennmittelberandung entfernt. Das eigentliche Bauteil kann anschließend noch von Trennmittelresten gereinigt werden. Dies kann mit Unterstützung von Lösemitteln, vorzugsweise Wasser erfolgen. Zudem können Kavitäten, die mit Trennmittel gefüllt sind, durch vorhandene oder eingebrachte Bohrungen geleert werden.

Die Erfindung wird im folgenden anhand einer Zeichnung ausführlich erläutert.

Es zeigt:
- Figur 1:: eine perspektivische Ansicht des Prozeßablaufes,
- Figur 2:: eine Draufsicht auf eine Schicht eines Körpers mit einem nicht entformbaren Hohlraum und
- Figur 3:: ein Diagramm eines Datenablaufs.

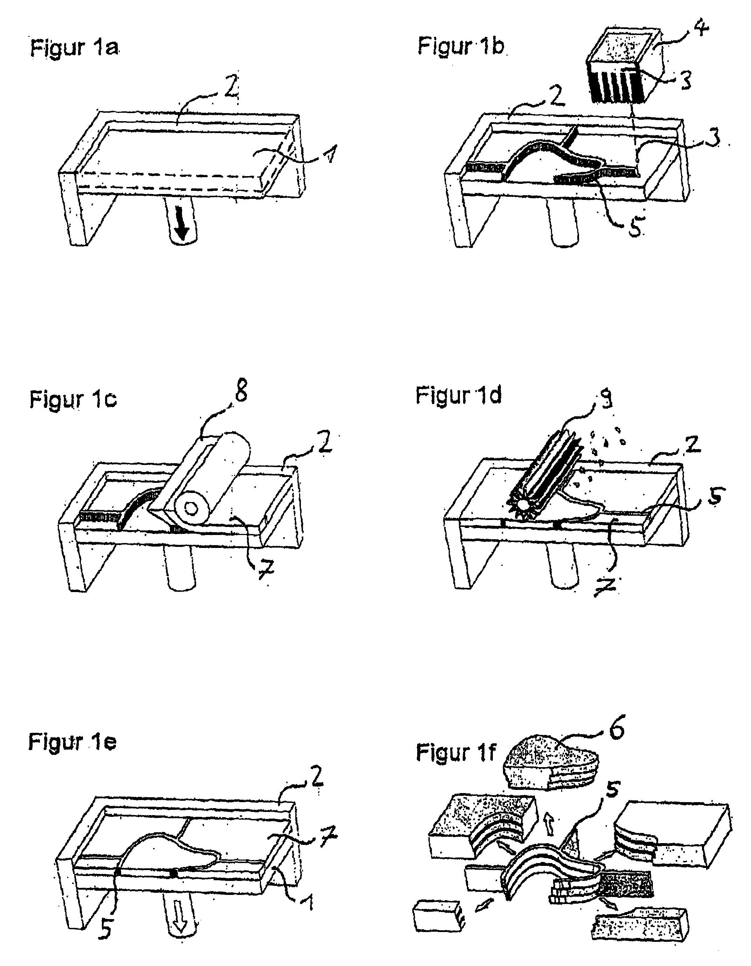

In Figur 1a ist das Absenken der Bauplattform 1 im Formkasten 2 um die Schichtdicke zu sehen.

Im Anschluß, in Figur 1b dargestellt, folgt das Auftragen des ersten Materials 3 mittels des Dosierkopfes 4 in vorbestimmten Regionen, die die dünne Berandung 5 des Querschnittes in der korrespondierenden Höhe des zu fertigenden Bauteils 6 entspricht. Zudem werden noch weitere Trennfugen 5 bis zum Rand des Formkastens 2 aufgetragen.

Figur 1c zeigt das Füllen der Schicht im Formkasten 2 mit der Formmasse 7 über das Dosiergerät 8.

Danach wird, wie in Figur 1d gezeigt, die Schichtstärke über einen Abtragsprozeß einer rotierenden Klinge 9 eingestellt, so daß die Trennfugen 5 wieder an die Oberfläche treten.

Figur 1e zeigt das nochmalige Absenken der Bauplattform 1.

Die in den Figuren 1b bis 1e gezeigten Vorgänge werden solange wiederholt, bis das vollständige Bauteil 6 aus dünnen Schichten des Formmaterials 7 entstanden ist. Das Bauteil wird dann, komplett in weitere Teile aus dem Formmaterial 7 eingebettet, aus dem Formkasten 2 entnommen und entformt.

Figur 1f zeigt das Entformen des Bauteils 6 durch Lösen der Teile außerhalb der Berandung an den Trennfugen 5.

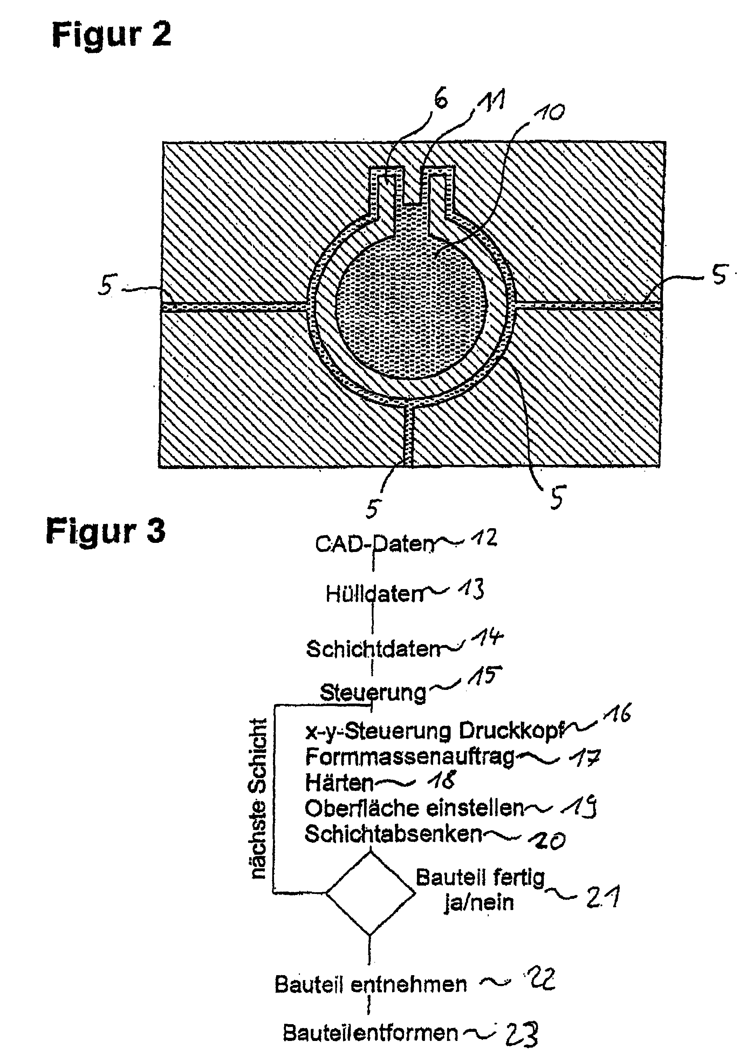

Figur 2 zeigt die Draufsicht auf einen beispielhaften Schnitt eines Bauteils 6, der einen nicht entformbaren Kern 10 aufweist. Um den Hohlraum nach Prozeßende zu leeren, wird der Kern im ersten Material 3 ausgeführt. Nach Prozeßende wird das Material 3 dieses Bereichs gelöst und über eine Öffnung 11 entfernt. Deutlich zu erkennen sind die Trennfugen 5, die als Entformhilfen bei Prozeßende dienen. Damit können auch hinterschnittene Bauteile 6 entformt werden.

Figur 3 zeigt schematisch den Datenlauf des Prozesses. Dabei werden aus den 3D-CAD Daten 12 zunächst die Hülldaten 13 gewonnen. Dazu wird softwaretechnisch auf die Berandung des Körpers eine dünne Schale gesetzt. Zudem werden in diesem Lauf noch Anhand der Überprüfung von Hinterschnitten, die weiteren Trennfugen 5 generiert. Anschließend werden nur die Trennfugen 5 entsprechend der Schichtdicke im Rechner in dünne Scheiben geschnitten. Es entstehen Schichtdaten 14, die an die Steuerung 15 übergeben werden können. Diese steuert nun entsprechend diesen Daten 14 den Dosierkopf 4 über das Baufeld 1, so daß die Trennfugen 5 entstehen. Dies erfolgt mit einer x-y Steuerung 16 des Dosierkopfes 4. Es erfolgt wieder anschließend ein Auftrag 17 der Formmasse 7 über das Dosiergerät 8. Der Vorgang wird von einem Härten 18 der Formmasse gefolgt.

Anschließend stellt die Steuerung 15 mit einem Werkzeug 9 in Schritt 19 die Schichtstärke ein. Danach wird die Bauplattform 1 in Schritt 20 abgesenkt. Es erfolgt anschließend in der Steuerung eine Abfrage 21, ob das Bauteil fertig ist. D.h. ob alle Schichtdaten 14 abgearbeitet sind. Ist dies nicht der Fall springt die Steuerung 15 zurück auf das Ansteuern 15 des Dosierkopfes 4, um die neue Schicht zu beginnen. Der Prozeß wird bis zu der Entscheidung 21 wiederholt. Falls bei dieser Abfrage 21 festgestellt wird, daß das Bauteil 6 fertiggestellt ist, wird der Prozeß beendet. Man kann nun das Bauteil 6 dem Formkasten 2 in Schritt 22 entnehmen und in Schritt 23 entlang der Trennfugen 5 durch Entfernen des Stützkörpers entformen.

Dieses Entformen kann vereinfacht werden, wenn zum Erzeugen der Trennfuge ein Mittel verwendet wird, welches Wasser enthält. Das gesamte Bauteil kann dann nach der Entnahme aus dem Formkasten beispielsweise in einem Mikrowellenofen so erhitzt werden, daß das Wasser schlagartig verdampft und die entstehenden Kräfte die Teile des Stützkörper von dem eigentlichen Bauteil entlang der Trennfuge abstoßen.

Soll nicht nur ein Bauteil erzeugt werden, weil z.B. eine kleinere Serie von Bauteilen benötigt wird, so besteht die Möglichkeit, den Stützkörper zum Aufbau eines Formwerkzeuges zu verwenden.

## Patentansprüche

1. Verfahren zum Erzeugen eines dreidimensionalen Körpers (6), wobei der Aufbau des Körpers (6) schichtenweise durch Auftragen von zwei unterschiedlichen Materialien, eines als Trennmittel verwendeten ersten Materials (3) und eines zweiten Materials (7), in jeder Schicht erfolgt, wobei in jeder Schicht
zuerst das erste Material (3) gezielt linienförmig entlang der Außenkontur des dreidimensionalen Körpers in der jeweiligen Schicht aufgetragen wird und
anschließend von dem ersten Material (3) frei verbliebene Restflächen in der Schicht ungezielt mit dem zweiten Material (7) gefüllt werden.

2. Verfahren nach Anspruch 1, wobei durch den Auftrag des zweiten Materials der dreidimensionale Körper und ein Stützkörper aufgebaut werden und durch den gezielten Auftrag des ersten Materials eine Trennfuge zwischen dem dreidimensionalen Körper und dem Stützkörper erzeugt wird.

3. Verfahren nach Anspruch 2, wobei das erste Material mit geringer Wandstärke aufgetragen wird.

4. Verfahren nach Anspruch 3, wobei zur Erzeugung nicht entformbarer Hohträume das erste Material bei diesen Flächenanteilen gezielt flächig aufgetragen wird.

5. Verfahren nach einem der Ansprüche 1 bis 4, wobei Wachs als erstes Material verwendet wird.

6. Verfahren nach einem der Ansprüche 1 bis 4, wobei Gießharz als zweites Material verwendet wird.

7. Verfahren nach Anspruch 6, wobei der Auftrag des zweiten Materials durch Fluten und Abrakeln erfolgt.

8. Verfahren nach einem der Ansprüche 1 bis 6, wobei pulverförmiges Material als zweites Material verwendet wird.

9. Verfahren nach Anspruch 8, wobei der Auftrag des zweiten Materials durch Aufstreuen und Abstreifen erfolgt.

10. Verfahren nach einem der Ansprüche 1 bis 9, wobei der letzte schichtweise Auftrag in Verbindung mit einem Materialabtrag geglättet und nivelliert und das abgetragene Material entfernt wird.

11. Verfahren nach einem der Ansprüche 1 bis 10, wobei das erste Materials mit einem Schreibkopf aufgetragen wird, der auf Abruf Tropfen ausstößt.

12. Verfahren nach einem der Ansprüche 1 bis 4, wobei das zweite Material aus zwei einzeln nicht aushärtenden Komponenten besteht, daß die Komponenten vor dem Auftragen gemischt werden und die Mischung nach dem Auftragen ausgehärtet wird.

13. Verfahren nach einem der Ansprüche 1 bis 4, wobei das zweite Material durch ganzflächiges Bestrahlen ausgehärtet wird.

14. Verfahren nach einem der Ansprüche 1 bis 4, wobei der dreidimensionale Körper in einem Formkasten auf einer Bauplattform erzeugt und das zweite Material durch Wärmeleitung über die Bauplattform und den Formkasten ausgehärtet wird.

15. Verfahren nach einem der Ansprüche 1 bis 4, wobei das zweite Material durch einen Sinterprozeß ausgehärtet wird.

16. Verfahren nach einem der Ansprüche 1 bis 4, wobei das zweite Material durch Begasen ausgehärtet wird.

17. Verfahren nach einem der Ansprüche 1 bis 4, wobei der dreidimensionale Körper durch Entfemen des ersten Materials entformt wird.

18. Verfahren nach Anspruch 17, wobei das erste Material mit Lösungsmittel entfernt wird.

19. Verfahren nach Anspruch 17, wobei das erste Material mittels Wärmeeintrag entfernt wird.

20. Verfahren nach Anspruch 17, wobei der Stützkörper nach dem Entformen zur Herstellung einer Gießform verwendet wird.

21. Verfahren nach einem der Ansprüche 1 bis 4, wobei das erste Material verdampfbares Wasser enthält.

## Claims

1. Method for producing a three-dimensional body (6), wherein the construction of the body (6) is carried out layer-wise by depositing in each layer two different materials, a first material (3) being a release material and a second material (7), wherein in each layer, at first, said one material (3) is selectively deposited in a shape of a line along the exterior contour of said three-dimensional body in the respective layer and, afterwards, remaining areas are filled with the second material (7).

2. Method according to claim 1, wherein said three-dimensional body and a support body are produced by depositing said second material and a release joint between said three-dimensional body and said support body is generated by said selectively depositing said one material.

3. Method according to claim 2, wherein said one material is deposited releasing a thin wall thickness.

4. Method according to claim 3, wherein for generating closed or undercut cavities said one material is selectively deposited in a whole-plane manner.

5. Method according to one of claims 1 to 4, wherein a wax material is used as said one material.

6. Method according to one of claims 1 to 4, wherein a cast resin is used as said second material.

7. Method according to claim 6, wherein deposition of said second material is carried out by flooding and doctoring.

8. Method according to one of claims 1 to 6, wherein a powder material is used as said second material.

9. Method according to claim 8, wherein depositing said second material is carried out by spreading and stripping.

10. Method according to one of claims 1 to 9, wherein the layer deposited last is evened and smoothed in connection with loosening material and the loosened material is removed.

11. Method according to one of claims 1 to 10, wherein said one material is deposited by means of a drop-on-demand printing head.

12. Method according to one of claims 1 to 4, wherein said second material comprises two components, each of which not hardening separately from the other, wherein said components are mixed before depositing them and the mixed components are hardened after depositing them.

13. Method according to one of claims 1 to 4, wherein said second material is hardened by whole-plane irradiation.

14. Method according to one of claims 1 to 4, wherein said three-dimensional body is built-up in a building box on a building platform and said second material is hardened by heat conduction through said building platform and said building box.

15. Method according to one of claims 1 to 4, wherein said second material is hardened by a sintering method.

16. Method according to one of claims 1 to 4, wherein said second material is hardened by applying gas.

17. Method according to one of claims 1 to 4, wherein said three-dimensional body is demoulded by removing said one material.

18. Method according to claim 17, wherein said one material is removed by applying a solvent.

19. Method according to claim 17, wherein said one material is removed by applying heat.

20. Method according to claim 17, wherein after the removing from the mould said support body is used to make a casting mould.

21. Method according to one of claims 1 to 4, wherein said one material contains vaporizable water.

## Revendications

1. Procédé pour fabriquer un corps (6) en trois dimensions, la construction du corps (6) s'effectuant couche par couche, par l'application dans chaque couche de deux matériaux différents, un premier matériau (3) utilisé comme agent de séparation et un deuxième matériau (7) dans lequel pour chaque couche, on applique d'abord le premier matériau (3) de façon appropriée, en forme de ligne, le long du contour extérieur du corps en trois dimensions dans la couche correspondante et on remplit ensuite les surfaces restantes non remplies du premier matériau (3) dans la couche, de façon non ciblée, avec le deuxième matériau (7).

2. Procédé selon la revendication 1, le corps en trois dimensions et un corps d'appui étant constitués par l'application du deuxième matériau, et un joint de séparation entre le corps en trois dimensions et le corps d'appui étant généré par l'application appropriée du premier matériau.

3. Procédé selon la revendication 2, le premier matériau étant appliqué avec une faible épaisseur de paroi.

4. Procédé selon la revendication 3, le premier matériau étant appliqué en surface de façon appropriée sur ces parties de surface pour générer des cavités non démoulables.

5. Procédé selon l'une quelconque des revendications 1 à 4, de la cire étant utilisée comme premier matériau.

6. Procédé selon l'une quelconque des revendications 1 à 4, de la résine de coulée étant utilisée comme deuxième matériau.

7. Procédé selon la revendication 6, l'application du deuxième matériau s'effectuant par remplissage et raclage.

8. Procédé selon l'une quelconque des revendications 1 à 6, un matériau sous forme de poudre étant utilisé comme deuxième matériau.

9. Procédé selon la revendication 8, l'application du deuxième matériau s'effectuant par épandage et raclage.

10. Procédé selon l'une quelconque des revendications 1 à 9, la dernière application par couche en association avec un enlèvement du matériau étant lissée et mise à niveau, et le matériau enlevé étant évacué.

11. Procédé selon l'une quelconque des revendications 1 à 10, le premier matériau étant appliqué avec une tête d'écriture qui expulse des gouttes sur simple appel.

12. Procédé selon l'une quelconque des revendications 1 à 4, le deuxième matériau comprenant deux composants qui ne durcissent pas individuellement, les composants étant mélangés avant l'application et le mélange étant durci après l'application.

13. Procédé selon l'une quelconque des revendications 1 à 4, le deuxième matériau étant durci par exposition à des rayons sur toute sa surface.

14. Procédé selon l'une quelconque des revendications 1 à 4, le corps en trois dimensions étant fabriqué dans un châssis de moulage sur une plate-forme de construction, et le deuxième matériau étant durci par conduction thermique au moyen de la plate-forme de construction et du châssis de moulage.

15. Procédé selon l'une quelconque des revendications 1 à 4, le deuxième matériau étant durci par un procédé de frittage.

16. Procédé selon l'une quelconque des revendications 1 à 4, le deuxième matériau étant durci par exposition à des gaz.

17. Procédé selon l'une quelconque des revendications 1 à 4, le corps en trois dimensions étant déformé par l'enlèvement du premier matériau.

18. Procédé selon la revendication 17, le premier matériau étant évacué avec du solvant.

19. Procédé selon la revendication 17, le premier matériau étant enlevé au moyen d'apport de chaleur.

20. Procédé selon la revendication 17, le corps d'appui étant utilisé après le démoulage pour la fabrication d'un moule de coulée.

21. Procédé selon l'une quelconque des revendications 1 à 4, le premier matériau contenant de l'eau évaporable.
